# FASCICULE DE BREVET EUROPEEN

(11) **EP 1 587 867 B1**
(45) Date de publication et mention de la délivrance du brevet: **23.05.2012**
(21) Numéro de dépôt: 04702669.5
(22) Date de dépôt: 16.01.2004
(51) Int. Cl.: B60C 1/00, C08C 19/44, C08F 36/04, C08F 4/48, C08F 297/04, C08K 3/36, C08L 15/00

(54) **COMPOSITION DE CAOUTCHOUC POUR BANDE DE ROULEMENT DE PNEUMATIQUE ET PROCEDE DE PREPARATION**
KAUTSCHUKMASSE FÜR REIFENLAUFFLÄCHE UND HERSTELLUNGSVERFAHREN DAFÜR
RUBBER COMPOUND FOR TIRE TREAD AND METHOD FOR THE PREPARATION THEREOF

(30) Priorité: 20.01.2003 FR 0300743
(43) Date de publication de la demande: 26.10.2005
(73) Titulaire: Société de Technologie Michelin, 63000 Clermont-Ferrand Cedex 09 (FR); Michelin Recherche et Technique S.A., 1763 Granges-Paccot (CH)
(72) Inventeur: CABIOCH, Jean-luc, F-63119 Chateaugay (FR); COISSIEUX, Laurent, F-63360 GERZAT (FR); FAVROT, Jean-Michel, F-63800 Cournon d'Auvergne (FR); VARAGNIAT, Franck, F-63122 Ceyrat (FR)
(74) Mandataire: Le Cam, Véronique Marie Christine
(86) Numéro de dépôt international: PCT/EP2004/000280
(87) Numéro de publication internationale: WO 2004/065478

(56) Documents cités:
- WO-A-03/008470
- LUXTON A R ET AL: "OBSERVATIONS ON THE PREPARATION OF POLYBUTADIENE CONTAINING VINYL CYCLOPENTANE UNITS" POLYMER, JORDAN HILL, OXFORD, GB, vol. 22, mars 1981 (1981-03), pages 382-386, XP008002271 ISSN: 0032-3861

## Description

La présente invention concerne une composition de caoutchouc réticulable ou réticulée qui comprend un élastomère diénique présentant un taux massique d'unités vinyliques cycliques supérieur à 15 %, et qui est utilisable pour constituer une bande de roulement d'enveloppe de pneumatique. L'invention concerne également une telle bande de roulement et une telle enveloppe de pneumatique l'incorporant.

L'incorporation dans un polymère obtenu par voie anionique d'un monomère diène conjugué, tel que le butadiène, peut se faire sous la forme cis-1,4, trans-1,4 ou 1,2 (enchaînements vinyliques).

Les réactions de polymérisation anionique sont usuellement initiées par un organolithien, en présence d'un solvant hydrocarboné et d'un ou plusieurs monomères diènes conjugués. Les élastomères produits par ces réactions présentent en moyenne un taux massique d'enchaînements vinyliques qui est réduit, étant en général compris entre 8 % et 15 %. En vue d'obtenir des élastomères présentant une température de transition vitreuse (Tg) déterminée, il est connu d'ajouter au milieu de polymérisation un agent polaire, lequel a également pour effet d'élever d'une manière significative le taux moyen de ces enchaînements. Ce taux peut alors atteindre 90 %, par exemple.

Les documents de brevet américain US-A-5 620 939, US-A-5 906 956 et US-A-6 140 434 divulguent des procédés de polymérisation par voie anionique réalisés en discontinu, qui sont prévus pour élever le taux d'enchaînements vinyliques dans un élastomère diénique pouvant être un polybutadiène, un copolymère de styrène et de butadiène ou un polyisoprène. De plus, ces documents indiquent que les élastomères diéniques ainsi obtenus sont utilisables dans des compositions de caoutchouc pour bandes de roulement de pneumatique, qu'ils soient associés à du noir de carbone ou à de la silice. Ces procédés de polymérisation en discontinu sont mis en oeuvre à une température comprise entre 30 et 100° C, et ils consistent notamment à utiliser des systèmes catalytiques comprenant :
- un agent polaire comportant un ou plusieurs hétéro-atomes, tel que le tétrahydrofurane (THF) ou la tétraméthyléthylènediamine (TMEDA),
- un initiateur organolithié, tel que le n-butyllithium, et
- un sel d'un métal alcalin d'un alcool aliphatique ou alicyclique, tel que le tert-amylate ou le mentholate de sodium.

Plus précisément, le document US-A-5 620 939 divulgue, dans ses exemples, des rapports molaires [(sel / initiateur), (sel / agent polaire), (agent polaire / initiateur)] qui sont égaux à [1 ; 0,33 ; 3], [2 ; 0,66 ; 3], [3 ; 1 ;3], [0,5 ; 0,17 ; 3], [1 ; 0,5 ; 2] et [1 ; 0,2 ; 5].

Le document US-A-5 906 956 divulgue, dans ses exemples, les valeurs suivantes pour lesdits rapports molaires : [2 ; 1 ; 2], [0,5 ; 1 ; 0,5], [0,25 ; 0,08 ; 3], [0,5 ; 0,17 ; 3], [1 ; 0,33 ; 3], [1 ; 0,66 ; 3], [3 ; 1 ; 3], [0,5 ; 0,17 ; 3], [1 ; 0,5 ; 2] et [1 ; 0,2 ; 5].

Le document US-A-6 140 434 divulgue, dans ses exemples, les valeurs suivantes pour lesdits rapports molaires : [0,25 ; 0,03 ; 8], [0,25 ; 0,05 ; 5], [0,25 ; 0,08 ; 3], [0,25 ; 0,25 ; 1], [0,25 ; 0,5 ; 0,5], [0,15 ; 0,05 ; 3], [0,5 ; 0,17 ; 3], [1 ; 0,33 ; 3] et [0,25 ; 0,13 ; 2].

Indépendamment de l'élévation du taux d'enchaînements vinyliques dans ces élastomères, on a cherché par le passé à former des structures cycliques de type vinylcyclopentane dans les élastomères diéniques obtenus par voie anionique.
- Une solution pour former ces structures cycliques consiste à mettre en oeuvre des réactions post-polymérisation, par exemple en traitant les élastomères par des acides de Lewis.
- Une autre solution peut consister à former ces structures cycliques directement lors de la polymérisation anionique, en réalisant celle-ci en continu avec une concentration de monomère réduite dans le milieu réactionnel et en utilisant un système catalytique spécifique.

Le document de brevet américain US-A-3 966 691 décrit dans ses exemples de réalisation un procédé de cyclisation du butadiène dans le milieu de polymérisation, qui consiste à utiliser un système catalytique comprenant un initiateur constitué de n-butylsodium et un activateur constitué de tétraméthyléthylènediamine (TMEDA). A titre optionnel, un alcoxyde de lithium est adjoint au milieu de polymérisation pour accélérer celle-ci.

La polymérisation est réalisée en continu, à une température comprise entre -20° C et 150° C, et les polybutadiènes obtenus présentent un taux massique de cycles supérieur à 40 % mais une masse moléculaire moyenne en nombre n'excédant pas 2 000 g/mol.

Les articles « G. Quack, L. J. Fetters, Macromolecules, Vol 11, n° 2, pp. 369-373, (1978) » et « A. R. Luxton, M. E. Burrage, G. Quack, L. J. Fetters, Polymer, Vol 22, pp.382-386 » décrivent également des procédés de cyclisation en continu dans le milieu de polymérisation, consistant à utiliser des systèmes catalytiques comprenant un initiateur organolithié, tel que le n-butyllithium, et un agent polaire constitué de TMEDA (on pourra se reporter à la page 383, colonne de droite du dernier document cité, pour une description du mécanisme de cyclisation).

Les polymérisations sont réalisées à des températures comprises entre 30 et 90° C, et les polybutadiènes obtenus présentent un taux massique de cycles vinylcyclopentane d'au moins 18 % mais une masse moléculaire moyenne en nombre n'excédant pas 5 000 g/mol.

Un inconvénient majeur de ces procédés de cyclisation réside donc dans la valeur très réduite de la masse moléculaire moyenne en nombre des élastomères diéniques obtenus, qui ne rend pas ces élastomères utilisables pour constituer la matrice élastomère d'une composition de caoutchouc pour bande de roulement de pneumatique.

La demande de brevet WO 03/008470 au nom des demanderesses décrit des élastomères diéniques linéaires ou ramifiés issus d'au moins un diène conjugué, comportant des unités vinyliques cycliques de type vinylcycloalcane selon un taux massique égal ou supérieur à 15 % et présentant une masse moléculaire moyenne en nombre allant de 10 000 à 350 000 g/mol, ainsi que leurs procédés de préparation.

Le but de la présente invention est de remédier à cet inconvénient, et il est atteint en ce que les demanderesses ont découvert d'une manière surprenante que des élastomères diéniques linéaires ou ramifiés issus d'au moins un diène conjugué et présentant à la fois des unités vinyliques cycliques selon un taux massique égal ou supérieur à 15 % et une masse moléculaire moyenne en nombre allant de 30 000 à 350 000 g/mol, sont avantageusement utilisables, du fait de leur masse moléculaire relativement élevée et de leur forte teneur en unités vinyliques cycliques, pour former tout ou partie de la matrice élastomère d'une composition de caoutchouc réticulable ou réticulée qui est utilisable pour constituer une bande de roulement de pneumatique et qui comprend notamment en outre une charge renforçante.

En effet, les demanderesses viennent de découvrir d'une manière inattendue que des compositions de type bande de roulement à base de ces élastomères à fort taux d'unités vinyliques cycliques présentent notamment, à l'état réticulé, des pertes hystérétiques et des modules d'allongement qui sont tout à fait du même ordre que ceux présentés par des compositions de bande de roulement connues à base d'élastomères diéniques dépourvus d'unité vinylique cyclique, ces compositions étant identiques par ailleurs.

Avantageusement, la composition de caoutchouc selon l'invention est telle que l'élastomère à unités vinyliques cycliques qu'elle comprend présente une masse moléculaire moyenne en nombre allant de 60 000 à 350 000 g/mol et, à titre encore plus avantageux, allant de 100 000 à 300 000 g/mol.

Selon un exemple avantageux de réalisation de l'invention, la composition de caoutchouc selon l'invention est telle que ledit élastomère présente un taux massique d'unités vinyliques cycliques égal ou supérieur à 20 %.

Les unités vinyliques cycliques dudit élastomère selon l'invention sont de type vinylcycloalcane, et elles répondent à la formule générique suivante : 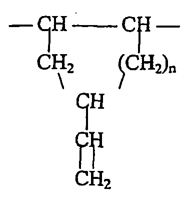 avec n = 1 ou 2.

L'élastomère diénique de la composition selon l'invention comprend de préférence une fraction massique d'unités issues de diènes conjugués qui est supérieure à 30 %, et il peut être tout homopolymère ou copolymère obtenu par polymérisation :
- d'un monomère diène conjugué ayant de 4 à 12 atomes de carbone ou de plusieurs de ces monomères diènes conjugués entre eux, ou bien
- d'un ou plusieurs de ces monomères diènes conjugués avec un ou plusieurs composés vinylaromatiques ayant chacun de 8 à 20 atomes de carbone.

A titre de monomères diènes conjugués conviennent notamment le butadiène-1,3, le 2-méthyl-1,3-butadiène, les 2,3-di(alkyle en C1 à C5)-1,3-butadiènes tels que le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyltoluène", le para-tertiobutylstyrène, le divinylbenzène. On notera que le styrène est utilisé à titre préférentiel.

De préférence, on utilise dans le procédé selon l'invention le butadiène-1,3 et/ou l'isoprène à titre de monomère(s) diène(s) conjugué(s) et le styrène à titre de monomère vinylaromatique, pour l'obtention de copolymères de butadiène/ isoprène (BIR), de styrène/ butadiène (SBR), de styrène/ isoprène (SIR), ou de butadiène/ styrène/ isoprène (SBIR).

A titre encore plus préférentiel, ledit élastomère est constitué d'un homopolymère du butadiène-1,3 (BR) ou d'un copolymère du butadiène-1,3 et d'un co-monomère vinylaromatique.

Dans ce dernier cas, on peut copolymériser le butadiène-1,3 et le styrène pour l'obtention d'un SBR présentant au moins 70 % en poids de butadiène et au plus 30 % en poids de styrène et, de préférence, au moins 90 % de butadiène et au plus 10 % de styrène.

Dans ce cas préférentiel où l'élastomère comportant des unités vinyliques cycliques est un BR ou un SBR, on notera que cet élastomère peut avantageusement présenter un taux nul ou réduit de styrène (cas du BR et du SBR, respectivement), monomère relativement coûteux par rapport au butadiène, d'où un coût global réduit en conséquence pour l'obtention de la composition selon l'invention, tout en conférant à cette composition sensiblement les mêmes propriétés à l'état réticulé (pertes hystérétiques, modules et température de transition vitreuse) que celles conférées par un SBR connu à taux plus élevé de styrène, grâce à la forte teneur en unités vinyliques cycliques du BR ou du SBR selon l'invention qui a pour effet de contrebalancer ce déficit relatif en taux d'unités styréniques.

Les élastomères diéniques obtenus par les procédés selon l'invention peuvent être ensuite ramifiés (i.e. couplés ou étoilés) ou non.

Comme agent d'étoilage conviennent tout particulièrement le trichlorométhylsilane, le tétrachlorométhylsilane, le carbonate de diphényle ou, à titre encore plus préférentiel, le tris(2,4-ditertbutylphényl)phosphite, tel que cela est décrit dans le document de brevet américain US-B-6 384 164 au nom des demanderesses.

Selon une caractéristique préférentielle de l'invention, ledit élastomère diénique selon l'invention est obtenu par polymérisation anionique d'un ou de plusieurs monomères comprenant au moins un monomère diène conjugué, comprenant la réaction, dans un solvant hydrocarboné inerte aliphatique ou alicyclique, du ou des monomères avec un système catalytique comprenant un initiateur organolithié et un agent polaire comportant plusieurs hétéro-atomes, la réaction étant réalisée :
(1) soit en discontinu, le rapport molaire (agent polaire / initiateur) étant dans ce cas supérieur à 8,
(2) soit en continu, le rapport molaire (agent polaire / initiateur) étant dans ce cas égal ou supérieur à 3,
ce qui permet de préparer, dans ledit cas (1), un élastomère diénique linéaire présentant à la fois un taux massique d'unités vinyliques cycliques égal ou supérieur à 15 % et une masse moléculaire moyenne en nombre (Mn) allant de 10 000 g/mol à 60 000 g/mol, et
dans ledit cas (2), un élastomère diénique linéaire présentant à la fois un taux massique d'unités vinyliques cycliques égal ou supérieur à 15 % et une masse Mn allant de 10 000 à 300 000 g/mol, des Mn égales ou supérieures à 100 000 g/mol pouvant être obtenues à condition d'incorporer audit système catalytique un sel d'un métal alcalin d'un alcool aliphatique ou alicyclique, pour que le système satisfasse à la fois aux trois conditions :
(i) le rapport molaire (agent polaire / initiateur) est égal ou supérieur à 3.
(ii) le rapport molaire (sel / initiateur) appartient à un domaine allant de 0,01 à 2, et
(iii) le rapport molaire (sel / agent polaire) appartient à un domaine allant de 0,001 à 0,5.

A titre d'initiateur organolithié utilisable dans ce système catalytique selon l'invention, on peut citer les composés monolithiés comportant un groupe hydrocarboné aliphatique ou alicyclique ayant de 1 à 10 atomes de carbone, tels que le n-butyllithium (n-BuLi en abrégé ci-après), le sec-butyllithium, le tert-butyllithium, le n-propyllithium, l'amyllithium, le cyclohexyllithium, ou le phényléthyllithium.

La quantité d'initiateur qui est utilisée pour former le système catalytique est de préférence comprise entre 0,002 et 0,01 mol par kg de monomère(s).

A titre d'agent polaire comportant plusieurs hétéro-atomes (atomes d'oxygène ou d'azote) qui est utilisable dans ce-système catalytique selon l'invention, on peut citer les agents polaires « multidentés » tels que les diéthers et les diamines, par exemple la tétraméthyléthylènediamine (TMEDA), le diméthoxyéthane (DME), le diéthylcarbitol (DEC), le triéthylèneglycoldiméthyléther (ou « triglyme »), le tétraéthylèneglycoldiméthyléther (ou « tétraglyme »), ou le dipipéridinoéthane.

Cet agent polaire est utilisé pour former le système catalytique selon l'invention à un taux compris entre 300 et 30000 parties pour un million de parties en poids de milieu réactionnel (ppm) et, de préférence, à un taux compris entre 500 et 3000 ppm.

On notera que les agents polaires comportant un seul hétéro-atome (agents « monodentés »), tels que les monoamines et les monoéthers, par exemple le tétrahydrofurane (THF), ne conviennent pas pour mettre en oeuvre les procédés selon l'invention, du fait qu'ils ne permettent pas d'obtenir le taux massique précité d'unités vinyliques cycliques dans l'élastomère diénique.

On notera que les procédés précités (1) ou (2) selon l'invention (en discontinu ou en continu) permettent d'obtenir des élastomères diéniques linéaires de masses moléculaires Mn supérieures à 10 000 g/mol, contrairement aux procédés mis en oeuvre au moyen des systèmes catalytiques connus.

On notera que ledit procédé (2), qui comprend la polymérisation anionique dans un réacteur continu agité d'au moins un monomère diène conjugué par la réaction, dans un solvant hydrocarboné inerte aliphatique ou alicyclique, du ou des monomères avec un système catalytique comprenant ledit initiateur organolithié et ledit agent polaire comportant plusieurs hétéro-atomes de manière que ladite relation (i) soit vérifiée, permet avantageusement l'obtention d'élastomères linéaires de masses Mn égales ou supérieure à 60 000 g/mol, voire égales ou supérieures à 100 000 g/mol dans le cas de l'incorporation dudit sel au système catalytique de manière que ce système satisfasse en outre aux conditions (ii) et (iii) précitées.

Ce procédé (2) en continu selon l'invention incluant l'utilisation dudit sel constitue un mode préférentiel de réalisation de la présente invention, car il permet d'obtenir des élastomères diéniques présentant à la fois de très hautes masses moléculaires par rapport à l'état de la technique connu et un taux massique d'unités vinyliques cycliques égal ou supérieur à 20 %.

On notera également que les procédés (1) et (2) selon l'invention permettent avantageusement de contrôler la distribution des masses moléculaires des élastomères diéniques obtenus, lesquels présentent un indice de polymolécularité Ip relativement réduit (inférieur à 3).

Concernant ledit procédé (1) en discontinu selon l'invention qui est caractérisé par une valeur de rapport molaire (agent polaire / initiateur) supérieure à 8, ce rapport est avantageusement égal ou supérieur à 10 et, à titre encore plus avantageux, égal ou supérieur à 15. On peut choisir par exemple de limiter à 100 la valeur de ce rapport molaire.

Concernant ledit procédé (2) en continu selon l'invention qui est caractérisé par ladite condition (i) et éventuellement lesdites conditions (ii) et (iii), le rapport molaire (agent polaire/ initiateur) est avantageusement égal ou supérieur à 5 et, à titre encore plus avantageux, ce rapport molaire est égal ou supérieur à 10. On peut choisir par exemple de limiter à 100 la valeur de ce rapport molaire.

Toujours à titre encore plus avantageux, pour l'obtention par ledit procédé (2) en continu selon l'invention d'élastomères diéniques linéaires de masses moléculaires Mn spécifiquement égales ou supérieure à 100 000 g/mol, les systèmes catalytiques selon l'invention sont tels que le rapport molaire (agent polaire / initiateur) est égal ou supérieur à 15, ce qui représente des quantités d'agent polaire très élevées dans ces systèmes catalytiques par rapport aux quantités utilisées dans les systèmes catalytiques connus. On peut par exemple choisir une valeur allant de 15 à 40 pour ce rapport molaire.

A titre de sel de métal alcalin d'un alcool aliphatique ou alicyclique utilisable dans ces procédés selon l'invention, on utilise de préférence un sel dont l'alcool comporte de 3 à 12 atomes de carbone et, à titre encore plus préférentiel, de 3 à 8 atomes de carbone.

Avantageusement, on utilise un sel de sodium ou de potassium d'un alcool aliphatique, tel que le tert-butylate de sodium, le tert-amylate de sodium ou l'isopentylate de sodium, ou bien d'un alcool alicyclique, tel qu'un cyclohexanolate dialkylé de sodium, par exemple le mentholate de sodium.

Selon une caractéristique préférentielle de l'invention, le système catalytique utilisé dans ledit procédé (2) en continu incluant ledit sel (caractérisé par lesdites conditions (i), (ii) et (iii)) est tel que le rapport molaire (sel / agent polaire) appartient à un domaine allant de 0,001 à 0,1.

Selon une autre caractéristique préférentielle de l'invention, le système catalytique utilisé dans ce procédé (2) en continu est tel que le rapport molaire (sel / initiateur) appartient à un domaine allant de 0,01 à 0,6. Selon un premier exemple de réalisation de cette caractéristique préférentielle, ce rapport appartient à un domaine allant de 0,01 à 0,2 et, selon un second exemple de réalisation, ce rapport appartient à un domaine allant de 0,3 à 0,6.

Ce domaine allant de 0,01 à 0,2 pour le rapport molaire (sel / initiateur) est particulièrement bien adapté pour l'obtention, par le procédé (2) selon l'invention en continu, d'élastomères linéaires de masse moléculaire Mn égale ou supérieure à 100 000 g/mol et présentant un taux massique d'unités vinyliques cycliques qui est égal ou supérieur à 15 %, avantageusement égal ou supérieur à 20 %.

Quant au domaine allant de 0,3 à 2 pour ce rapport molaire (sel / initiateur) et, à titre préférentiel, allant de 0,3 à 0,6, il est particulièrement bien adapté pour l'obtention, par le procédé (2) selon l'invention en continu, d'élastomères linéaires de masse moléculaire Mn inférieure ou égale à 30 000 g/mol et présentant un taux massique d'unités vinyliques cycliques égal ou supérieur à 35 %, avantageusement égal ou supérieur à 40 %.

D'une manière générale, on notera par ailleurs que le taux massique d'unités vinyliques dans les élastomères diéniques obtenus par les procédés selon l'invention est compris entre 40 % et 65%.

A titre de solvant hydrocarboné inerte utilisable dans les procédés selon l'invention, on peut citer les solvants aliphatiques ou alicycliques tels que le pentane, l'hexane, le mélange commercial hexane/ méthylcyclopentane, l'heptane, le méthylcyclohexane, ou le cyclohexane.

On notera que des solvants aromatiques, tels que le toluène, ne sont pas utilisables.

Bien entendu, les compositions de l'invention peuvent contenir un seul élastomère diénique comportant des unités vinyliques cycliques tel que celui précité ou un mélange de plusieurs de ces élastomères diéniques.

Ce ou ces élastomères diéniques comportant un taux massique d'unités vinyliques cycliques supérieur à 15 % peuvent être utilisés seuls dans la composition conforme à l'invention, ou être utilisés en coupage avec tout autre élastomère conventionnellement utilisé dans les pneumatiques, tel que du caoutchouc naturel ou un coupage à base de caoutchouc naturel et un élastomère synthétique, ou encore un autre élastomère diénique éventuellement couplé et/ou étoilé ou encore partiellement ou entièrement fonctionnalisé.

On notera que l'amélioration des propriétés de la composition de caoutchouc selon l'invention sera d'autant plus élevée, que la proportion dudit ou desdits élastomères conventionnels dans la composition selon l'invention sera plus réduite.

Avantageusement, la composition selon l'invention comprend ledit élastomère à unités vinyliques cycliques selon une quantité égale ou supérieure à 50 pce (pce: parties en poids pour cent parties d'élastomère(s)) et, à titre encore plus avantageux, selon une quantité égale ou supérieure à 70 pce (cet ou ces élastomères conventionnels étant alors présents dans la composition selon l'invention selon une quantité inférieure ou égale à 50 pce ou bien inférieure ou égale à 30 pce, respectivement).

Selon un mode préférentiel de réalisation de l'invention, ladite composition comprend ledit élastomère à unités vinyliques cycliques selon une quantité égale à 100 pce.

Comme indiqué précédemment, la composition selon l'invention comprend également une charge renforçante, selon une quantité pouvant varier de 50 à 150 pce.

Selon un premier exemple de réalisation de l'invention, ladite charge renforçante comprend une charge inorganique renforçante selon une fraction massique allant de préférence de 50 % à 100 %.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Avantageusement, ladite charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

De préférence, on utilise une silice présentant des surfaces spécifiques BETou CTAB qui vont toutes deux de 80 m²/g à 260 m²/g.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fmes. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-735 088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

A titre de charge inorganique renforçante, on peut aussi utiliser, à titre non limitatif :
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Selon un second exemple de réalisation de l'invention, ladite charge renforçante comprend du noir de carbone, selon une fraction massique allant de 50 % à 100 %. Conviennent tous les noirs de carbone conventionnellement utilisés dans les enveloppes de pneumatique et particulièrement dans les bandes de roulement de telles enveloppes, notamment les noirs du type HAF, ISAF, SAF. On peut citer à titre non limitatif les noirs N115, N134, N234, N339, N347, N375.

Ladite charge renforçante peut comprendre un coupage de ladite charge inorganique renforçante avec du noir de carbone, la fraction massique de noir de carbone dans ladite charge renforçante étant de préférence choisie inférieure ou égale à 50 %.

Par exemple, les coupages noir/ silice ou les noirs partiellement ou intégralement recouverts de silice conviennent pour constituer la charge renforçante.

La composition de caoutchouc selon l'invention peut comprendre en outre de manière classique un agent de liaison charge inorganique renforçante / matrice élastomère (encore appelé agent de couplage), qui a pour fonction d'assurer une liaison (ou couplage) suffisante, de nature chimique et/ou physique, entre ladite charge inorganique et la matrice, tout en facilitant la dispersion de cette charge inorganique au sein de ladite matrice.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée " Y-T-X ", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, ou susceptible d'assurer efficacement, dans les compositions de caoutchouc diénique utilisables pour la fabrication de pneumatiques, la liaison ou couplage entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:
(I) Z - A - Sₙ - A - Z , dans laquelle:
   - n est un entier de 2 à 8 (de préférence de 2 à 5);
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
   - Z répond à l'une des formules ci-après: 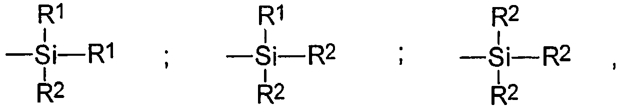 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus préférentiellement des groupes alkoxyle en C₁-C₄, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

Comme alkoxysilanes polysulfurés, on citera plus particulièrement les polysulfures (notamment les disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule [(C₂H₅O)₃Si(CH₂)₃S₂]₂ ou le disulfure de bis(triéthoxysilylpropyle), en abrégé TESPD, de formule [(C₂H₅O)₃Si(CH₂)₃S]₂. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50 % en poids sur du noir de carbone), ou encore par la société Osi Specialties sous la dénomination Silquest A1289 (dans les deux cas, mélange commercial de polysulfures avec une valeur moyenne pour n proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774 au nom des demanderesses.

Les compositions conformes à l'invention comprennent également, outre ladite matrice élastomère, ladite charge renforçante et éventuellement ledit agent de liaison, tout ou partie des autres constituants et additifs habituellement utilisés dans les compositions de caoutchouc, tels que des plastifiants, des pigments, des anti-oxydants, des cires anti-ozonantes, un système de réticulation à base de soufre et/ou de peroxyde et/ou de bismaléimides, un ou plusieurs agents de recouvrement de la charge inorganique renforçante tels que des alkylalcoxysilanes, polyols, amines ou amides.

Les compositions conformes à l'invention peuvent être préparées en mettant en oeuvre un premier temps de travail thermo-mécanique des constituants de la composition, à l'exception du système de réticulation et à une température maximale comprise entre 130° C et 200° C, suivi d'un second temps de travail mécanique mis en oeuvre à une température inférieure à ladite température maximale du premier temps et au cours duquel est incorporé ledit système de réticulation.

Les caractéristiques précitées de la présente invention, ainsi que d'autres, seront mieux comprises à la lecture de la description suivante de plusieurs exemples de réalisation de l'invention, donnés à titre illustratif et non limitatif.

### Caractérisation des élastomères synthétisés :

- On a utilisé la technique SEC (chromatographie d'exclusion par la taille) pour déterminer les masses moléculaires et les indices de polymolécularité des élastomères. Selon cette technique, on sépare physiquement les macromolécules suivant leurs tailles respectives à l'état gonflé, dans des colonnes remplies d'une phase stationnaire poreuse.
   On utilise pour la séparation précitée un chromatographe commercialisé sous la dénomination « WATERS » et sous le modèle « 150C ». On utilise un jeu de deux colonnes « WATERS » dont le type est « STYRAGEL HT6E ».
- On a utilisé la technique « DSC » (« differential scanning calorimetry ») pour la mesure des températures de transition vitreuse (Tg) des élastomères obtenus.
- On a par ailleurs utilisé la technique de résonance magnétique nucléaire du carbone 13 (RMN¹³C) pour déterminer des caractéristiques de microstructure relatives aux élastomères obtenus. Le détail de cette caractérisation est explicité ci-après.

Les analyses RMN ¹³C sont réalisées sur un spectromètre « Bruker AM250 ». La fréquence nominale du carbone 13 est de 62,9 MHz. Pour être quantitatifs, les spectres sont enregistrés sans effet « Overhauser Nucléaire » (NOE). La largeur spectrale est de 240 ppm. L'impulsion d'angle utilisée est une impulsion à 90° dont la durée est de 5 µs. Un découplage à basse puissance et à large bande de proton est utilisé pour éliminer les couplages scalaires ¹H-¹³C durant l'acquisition ¹³C. Le temps de répétition de la séquence est de 4 secondes. Le nombre de transitoires accumulés pour augmenter le rapport signal/bruit est de 8192. Les spectres sont calibrés sur la bande du CDCl₃ à 77 ppm.

L'interprétation des spectres RMN des SBR et des BR a fait l'objet de nombreuses publications dans la littérature, par exemple constituées des documents suivants :
(1) Q.- T. Pham, R. Pétiaud, H. Waton, M.-F. Llauro-Darricades, Proton and Carbon NMR Spectra of Polymers, Penton Press, London (1991).
(2) Sato H., Ishikawa, T., Takebayashi K., Tanaka Y., Macromolecules, 22, 1748-1753, (1989).
(3) Harwood, H., J. Rubber Chem. Technology, 55, 769-806, (1982).
(4) Kobayashi E., Furakawa J., Ochiai M., Tsujimoto T, European Polym. J., 19, 871-875, (1983).
(5) Jiao S., Chen X., Hu L., Yan B., Chinese J. Polym. Sci., 8, 17-24, (1990).
(6) Quack G., Fetters L. J., Macromolecules, 11, N°2, 369-373, (1978).

En particulier les structures de type vinylcyclopentane ont été mises en évidence et attribuées dans le document (6) ci-dessus.

Les microstructures mises en évidence pour les SBR et les BR sont les suivantes :

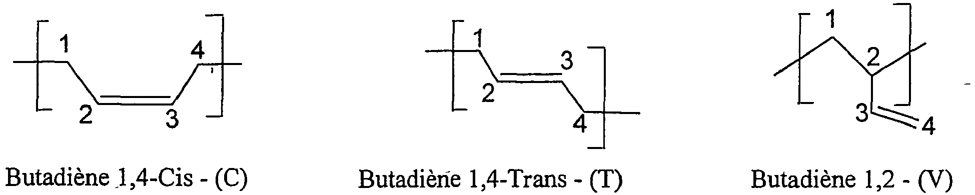

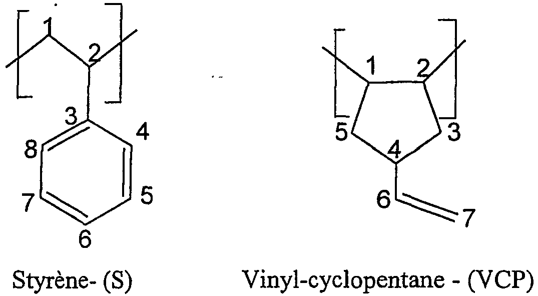

Le tableau ci-après résume les déplacements chimiques correspondant aux différents carbones de ces structures, dans la zone des carbones insaturés.

| Déplacements Chimiques | Attributions Structure - N° du carbone observé |
|---|---|
| 145 -140.6 | V-3, VCP-6 |
| 116.6-113.2 | V-4 |
| 126.5 -124.9 | S-6 |
| 132.9 -126.9 | S-4, S-5, S-7, S-8 C-2, C-3, T-2, T-3 |
| 145 -140.6 | V-3, VCP-6 |
| 147.1 -145 | S-3 |
| 113.2 -111 | VCP-7 |

Le rapport cis/ tráns de la partie diénique est déterminé dans la zone aliphatique du spectre, à partir des attributions bien connues de l'homme de l'art. (voir documents (1) à (5) ci-dessus).

### Caractérisation des compositions de caoutchouc obtenues :

- Viscosité Mooney : ML(1+4) à 100° C mesurée selon la norme ASTM D 1646.
- Modules d'allongement MA10, MA100 et MA300 (à 10 %, 100 % et 300 %, exprimés en MPa) mesurés selon la norme ASTM D 412.
- Dureté Shore A : mesurée selon la norme ASTM D 2240 de 1997.
- Pertes hystérétiques (PH) : mesurées en % par rebond à 60° C au sixième choc, selon la relation PH (%) = 100 x (W₀-W₁)/W₁, avec Wo : énergie fournie et W₁ : énergie restituée.
- Propriétés dynamiques en cisaillement : mesurées selon la norme ASTM D 2231-71, approuvée en 1977 (mesure en fonction de la déformation effectuée à 10 Hz avec une déformation crête-crête allant de 0,45 à 50 %. La non-linéarité exprimée est la différence de modules de cisaillement (MPa) entre 0,15 et 50 % de déformation. L'hystérèse est exprimée par la mesure de tan δ à 7 % de déformation et à 23° C selon la norme ASTM D 223 -71.
- Propriétés dynamiques en compression : mesures en fonction de la température effectuées à 10Hz lors de la montée en température (vitesse de 2° C par minute) avec une contrainte imposée de 12 N et un rapport force dynamique sur force statique de 1,25.

### I. EXEMPLES DE SYNTHESE D'ELASTOMERES :

### 1) Exemple 1 « témoin » : préparation d'un SBR 1 étoilé « témoin » de haute masse moléculaire et étendu à l'huile, exempt de motifs vinylcyclopentane.

Ce SBR est préparé en continu dans un réacteur parfaitement agité de 141.

On introduit dans ce réacteur du toluène, du butadiène, du styrène, du tétrahydrofuranne et du diméthoxyéthane, selon des quantités massiques de 100/ 10,15/ 4,15/ 0,68 /0,25 respectivement. On introduit en entrée de ligne 200 µmol de n-BuLi pour 100 g de monomères, afin de neutraliser les impuretés protiques apportées par les différents constituants présents dans cette entrée de ligne. A l'entrée du réacteur, on introduit 150 µmol de n-BuLi pour 100 g de monomères.

Le rapport molaire (agents polaires / n-BuLi) est d'environ 569.

On règle les différents débits de telle sorte que le temps de séjour moyen dans le réacteur soit de 40 min, et l'on maintient la température à 60° C.

Le taux de conversion, mesuré sur un prélèvement réalisé en sortie du réacteur, est de 87 % et la viscosité inhérente du SBR linéaire obtenu, mesurée à 0,1 g/dl dans le toluène, est de 2,61 dl/g. A la sortie du réacteur, on introduit un agent d'étoilage constitué de carbonate de propylène glycol, puis on soumet ce SBR étoilé à un traitement anti-oxydant, à l'aide de 0,2 pce de 2,2'-méthylène bis(4-méthyl-6-tertiobutylphénol) et de 0,2 pce de N-(1,3-diméthylbutyl)-N'-phényl-p-phénylènediamine.

La masse Mn de ce SBR 1 étoilé est de 250 000 g/mol, et l'indice Ip est de 1,89.

Ce SBR 1 « témoin » présente une teneur massique en enchaînements styréniques de 25 %. Pour la partie butadiénique, il présente une teneur massique en motifs vinyliques de 58 % et aucun motif vinylcyclopentane n'est détecté.

La Tg avant extension à l'huile de ce SBR 1 « témoin » est de -24° C.

Cet exemple montre clairement qu'un solvant de polymérisation aromatique, tel que le toluène, ne convient pas pour obtenir des unités vinyliques cycliques dans l'élastomère diénique de haute masse obtenu.

Ce SBR 1 « témoin » est ensuite étendu selon les techniques connues de l'homme de l'art avec 37 parties en poids d'huile aromatique pour 100 parties d'élastomère.

### 2) Exemple 2 selon l'invention : préparation d'un SBR 2 étoilé selon l'invention de haute masse moléculaire et étendu à l'huile :

Ce SBR est préparé en continu dans un réacteur parfaitement agité de 141.

On introduit dans ce réacteur du cyclohexane, du butadiène, du styrène et de la tétraméthyléthylènediamine, selon des quantités massiques de 100/ 13,6/ 0,7/ 0,17, respectivement (la quantité de tétraméthyléthylènediamine dans le milieu réactionnel étant d'environ 1500 ppm), et en outre une solution de tertioamylate de sodium selon un rapport sodium/ lithium actif de 0,04. On introduit en entrée de ligne 300 µmol de n-BuLi pour 100 g de monomères, afin de neutraliser les impuretés protiques apportées par les différents constituants présents en entrée de ligne. A l'entrée du réacteur, on introduit 660 µmol de n-BuLi pour 100 g de monomères. Le rapport molaire (TMEDA/ n-BuLi) est d'environ 15,5.

On règle les différents débits de telle sorte que le temps de séjour moyen dans le réacteur soit de 40 min, et l'on maintient la température à 80° C.

Le rapport molaire (sodium / tétraméthyléthylènediamine) est égal à 0,002.

Le taux de conversion, mesuré sur un prélèvement réalisé en sortie du réacteur, est de 90 %, et la viscosité inhérente du SBR linéaire obtenu, mesurée à 0,1 g/dl dans le toluène, est de 2,30 dl/g. Ce SBR linéaire présente une masse moléculaire Mn de 150 000 g/mol.

A la sortie du réacteur, on introduit un agent d'étoilage constitué de tris-(2,4-di-tert-butylphényl)phosphite, puis on soumet ce SBR étoilé au traitement anti-oxydant du § 1) ci-dessus. Ce SBR 2 étoilé présente une masse Mn de 260 000 g/mol et un indice Ip de 2,56.

La teneur massique de ce SBR 2 étoilé selon l'invention en enchaînements styréniques est de 6 %. Pour la partie butadiénique, la teneur massique d'enchaînements vinyliques est de 57 % et la teneur massique en motifs vinylcyclopentane est de 22 %.

La Tg avant extension à l'huile de ce SBR 2 selon l'invention est de -25° C.

En incorporant un sel d'un métal alcalin d'un alcool aliphatique ou alicyclique dans le système catalytique, on obtient donc suite à la polymérisation (effectuée en continu avec un rapport molaire (agent polaire/ initiateur) supérieur à 15) un taux massique d'unités vinyliques cycliques supérieur à 20 %, pour un élastomère linéaire de masse Mn égale à 150 000 g/mol.

Ce SBR 2 étoilé selon l'invention est ensuite étendu selon les techniques connues de l'homme de l'art avec 37 parties en poids d'huile aromatique pour 100 parties d'élastomère.

### 3) Exemple 3 selon l'invention : préparation d'un BR étoilé selon l'invention de haute masse moléculaire et étendu à l'huile :

Ce polybutadiène (BR) selon l'invention est préparé en continu dans des conditions identiques à celles décrites dans l'exemple 2 ci-dessus, à ceci près que l'on introduit dans le réacteur une quantité de butadiène égale à 14,3 parties pour cent parties de cyclohexane, que l'on n'introduit pas de styrène dans ce réacteur et que l'on introduit à l'entrée du réacteur 600 µmol de n-BuLi pour 100 g de monomères.

Le rapport molaire (TMEDA / n-BuLi) est d'environ 17,1.

Le taux de conversion, mesuré sur un prélèvement réalisé en sortie du réacteur, est de 92 %, et la viscosité inhérente du BR linéaire obtenu, mesurée à 0,1 g/dl dans le toluène, est de 1,86 dl/g. La masse moléculaire Mn de ce BR linéaire est de 130 000 g/mol.

On introduit comme précédemment l'agent d'étoilage précité à la sortie du réacteur, avant de soumettre le BR étoilé obtenu au même traitement anti-oxydant que ci-dessus.

Ce BR étoilé présente une masse Mn égale à 181 000 g/mol et un indice Ip égal à 2,89.

Ce BR étoilé selon l'invention présente une teneur massique d'enchaînements vinyliques de 56 % et une teneur massique en motifs vinylcyclopentane de 20 %.

La Tg avant extension à l'huile de ce BR selon l'invention est de -29° C.

Cet exemple montre également qu'en incorporant un sel d'un métal alcalin d'un alcool aliphatique ou alicyclique dans le système catalytique, on obtient suite à la polymérisation (effectuée en continu avec un rapport molaire (agent polaire / initiateur) supérieur à 15) un taux massique d'unités vinyliques cycliques égal à 20 % pour un polybutadiène linéaire de masse moléculaire Mn supérieure à 100 000 g/mol.

Ce BR étoilé selon l'invention est étendu selon les techniques connues de l'homme de l'art avec 35 parties en poids d'huile aromatique pour 100 parties d'élastomère.

### 4) Exemple 4 selon l'invention : préparation d'un SBR 4 étoilé selon l'invention de haute masse moléculaire, non étendu à l'huile :

Le polymère est préparé en continu dans un réacteur parfaitement agité de 0,81.

On introduit dans ce réacteur du cyclohexane, du butadiène, du styrène, de la tétraméthyléthylènediamine selon des quantités massiques de 100/ 13,15/ 1,13/ 0,29 respectivement. On introduit en entrée de ligne 200 µmol de n-BuLi pour 100 g de monomères, afin de neutraliser les impuretés protiques apportées par les différents constituants présents dans cette entrée de ligne. A l'entrée du réacteur, on introduit 1200 µmol de n-BuLi pour 100 g de monomères.

Le rapport molaire (TMEDA / n-BuLi) est d'environ 14,6.

On règle les différents débits de telle sorte que le temps de séjour moyen dans le réacteur soit de 40 min, et l'on maintient la température à 80° C.

Le taux de conversion, mesuré sur un prélèvement réalisé en sortie du réacteur, est de 92 % et la viscosité inhérente du SBR linéaire obtenu, mesurée à 0,1 g/dl dans le toluène, est de 1,35 dl/g. La masse moléculaire Mn de ce SBR linéaire est de 75 000 g/mol.

A la sortie du réacteur, on introduit un agent d'étoilage constitué de méthyltrichlorosilane (400 µmol pour 100g de monomères), puis on soumet ce SBR étoilé au même traitement anti-oxydant que précédemment.

La masse Mn de ce SBR 4 étoilé est de 120 000 g/mol, et l'indice Ip est de 1,89. La viscosité de ce SBR 4 est de 1,85 dl/g.

Ce SBR 4 présente un taux d'unités styréniques de 8 %, une teneur massique en motifs vinyliques de 51 % et une teneur massique en motifs vinylcyclopentane de 18 %.

La Tg de ce SBR 4 selon l'invention est de -28° C.

Cet exemple montre qu'il n'est pas nécessaire d'incorporer un sel d'un métal alcalin d'un alcool aliphatique ou alicyclique dans le système catalytique, pour obtenir suite à la polymérisation (effectuée en continu avec un rapport molaire (agent polaire / initiateur) supérieur à 10) un taux massique d'unités vinyliques cycliques supérieur à 15 % pour un élastomère linéaire de masse moléculaire Mn compris entre 50 000 et 100 000 g/mol.

### 5) Exemple 5 « témoin » : préparation d'un SBR 5 étoilé « témoin » de haute masse moléculaire, non étendu à l'huile :

Le SBR est préparé dans des conditions analogues à celles de l'exemple 4.

On introduit dans ce réacteur du cyclohexane, du butadiène, du styrène, de la tétraméthyléthylènediamine selon des quantités massiques de 100/ 10,6/ 3,7/ 0,02 respectivement. On introduit en entrée de ligne 200 µmol de n-BuLi pour 100 g de monomères, afin de neutraliser les impuretés protiques apportées par les différents constituants présents dans cette entrée de ligne. A l'entrée du réacteur, on introduit 1200 µmol de n-BuLi pour 100 g de monomères.

On règle les différents débits de telle sorte que le temps de séjour moyen dans le réacteur soit de 40 min, et l'on maintient la température à 60° C.

Le taux de conversion, mesuré sur un prélèvement réalisé en sortie du réacteur, est de 92 % et la viscosité inhérente du SBR obtenu, mesurée à 0,1 g/dl dans le toluène, est de 1,20 dl/g. A la sortie du réacteur, on introduit un agent d'étoilage constitué de méthyltrichlorosilane (400 µmol pour 100g de monomères), puis on soumet ce SBR 5 étoilé au même traitement anti-oxydant que précédemment.

La masse Mn de ce SBR 5 étoilé est de 110 000 g/mol, et l'indice Ip est de 1,51. La viscosité de ce SBR 5 est de 1,56 dl/g.

Ce SBR 5 présente pour la partie butadiénique une teneur massique en motifs vinyliques de 52 % et une teneur massique en motifs vinylcycloyentane de 2,5 %.

Le taux d'unités styréniques dans ce SBR 5 est de 25 %.

La Tg de ce SBR 5 est de -28° C.

### II. EXEMPLES DE CAOUTCHOUTERIE :

### 1) Premier exemple comparatif :

Dans cet exemple, on a comparé entre elles deux compositions de caoutchouc 1 et 2 de type bande de roulement pour pneumatique tourisme dont la charge renforçante est constituée de silice.

La première composition 1 « témoin » est à base du SBR 1 « témoin » obtenu à l'exemple 1 du § I. ci-dessus (ce SBR 1 présente notamment un taux massique d'enchaînements styréniques de 25 %, et il est dépourvu de motif vinylique cyclique).

La seconde composition 2 selon l'invention est à base du SBR 2 selon l'invention obtenu à l'exemple 2 du § I. ci-dessus (ce SBR 2 présente un taux massique d'enchaînements styréniques de 6 % et un taux massique de motifs vinyliques cycliques de 22 %).

La formulation de chacune des compositions 1 et 2 est la suivante (en pce : parties en poids pour cent parties d'élastomère):

| | |
|---|---|
| Elastomère SBR 1 ou SBR 2 | 100 |
| Silice (1) | 80 |
| Huile aromatique « ENERFLEX 65 » | 37,5 |
| Agent de liaison (2) | 6,4 |
| ZnO | 2,5 |
| Acide stéarique | 2 |
| Antioxydant (3) | 1,9 |
| Cire anti-ozone « C32ST » | 1,5 |
| Soufre | 1,1 |
| Sulfénamide (4) | 2 |
| Diphénylguanidine | 1,47 |

| | |
|---|---|
| (1) = Silice « ZEOSIL 1165 MP » (commercialisée par Rhodia) (2) = Agent de liaison « Si69 » (commercialisé par Dégussa) (3) = N-(1,3-dimétyl-butyl)-N'-phényl-p-phénylènediamine (4) = N-cyclohexyl-2-benzothiazylsulfénamide | |

Chaque composition est préparée selon la méthode décrite dans le document de brevet européen EP-A-501 227, étant précisé que l'on conduit un premier temps de travail thermo-mécanique en deux étapes qui durent respectivement 4 et 5 minutes, pour une vitesse moyenne des palettes de 85 tours/minute dans un mélangeur d'environ 400 cm³ jusqu'à atteindre une température maximale de tombée identique de 160° C, et que l'on conduit un second temps de travail mécanique sur un outil à cylindres à 30° C incluant l'incorporation du système de vulcanisation.

La vulcanisation est effectuée à 150° C pendant 60 minutes.

Les résultats sont consignés dans le tableau 1.

**TABLEAU 1**

| **COMPOSITION** | **1 (« témoin »)** | **2 (invention)** |
|---|---|---|
| ML(1+4) à 100° C _{«gomme»} | 67 | 55 |
| Propriétés à l'état non vulcanisé | | |
| ML(1+4) à 100° C _{«mélange»} | 97 | 82 |
| Propriétés à l'état vulcanisé | | |
| Shore | 65 | 65 |
| MA10 | 5,6 | 5,8 |
| MA100 | 1,8 | 1,9 |
| MA300 | 2,3 | 2,5 |
| MA300/MA100 | 1,3 | 1,3 |
| Pertes à 60° C | 24,3 | 27,3 |
| Propriétés dynamiques en fonction de la déformation | | |
| Delta G* à 23° C | 3,11 | 3,54 |
| Tan δ max à 23° C | 0,347 | 0,415 |
| Propriétés dynamiques en fonction de la température | | |
| Tg dynamique (°C) | -16 | -11 |
| Tan δ à Tg | 0,75 | 0,77 |

Concernant les propriétés à l'état vulcanisé, on notera que les propriétés de la composition 2 selon l'invention sont du même ordre de grandeur que celles de la composition 1 « témoin ».

En effet, les modules aux faibles et aux fortes déformations et les propriétés hystérétiques aux faibles et aux fortes déformations (tan δ max à 23° C et pertes à 60° C, respectivement) de la composition 2 sont proches des modules et des propriétés hystérétiques correspondants de la composition 1. Les différences de propriétés hystérétiques observées à petites (ΔG*) et à grandes (pertes à 60° C) déformations entre les compositions 1 et 2 sont principalement dues à la différence de Tg dynamique entre ces compositions. A même Tg dynamique, ces propriétés auraient été analogues.

De plus, la composition 2- selon l'invention présente une valeur de viscosité Mooney « mélange » inférieure de 15 points à celle de la composition 1 « témoin ».

On notera également que le SBR 2 selon l'invention, qui présente un taux massique d'enchaînements styréniques de 6 % seulement, permet de conférer à la composition 2 selon l'invention pratiquement les mêmes propriétés à l'état vulcanisé que celles conférées à la composition 1 « témoin » par le SBR 1, qui présente un taux massique d'enchaînements styréniques de 25 %, grâce au taux élevé (22 %) de motifs vinyliques cycliques que comporte ce SBR 2, à la différence du SBR 1 qui en est dépourvu.

### 2) Second exemple comparatif :

Dans cet exemple, on a comparé entre elles deux compositions de caoutchouc 1 et 3 de type bande de roulement pour pneumatique tourisme dont la charge renforçante est constituée de silice.

La première composition 1 « témoin » est identique à celle du § II. 1) ci-dessus.

La seconde composition 3 selon l'invention est à base du BR selon l'invention obtenu à l'exemple 3 du § I. ci-dessus (ce BR présente un taux massique de motifs vinyliques cycliques de 20 %).

La formulation de chacune des compositions 1 et 3 est la suivante
(en pce : parties en poids pour cent parties d'élastomère):

| | |
|---|---|
| Elastomère SBR 1 ou BR | 100 |
| Silice (1) | 80 |
| Huile aromatique « ENERFLEX 65 » | 37,5 |
| Agent de liaison (2) | 6,4 |
| ZnO | 2,5 |
| Acide stéarique | 2 |
| Antioxydant (3) | 1,9 |
| Cire anti-ozone « C32ST » | 1,5 |
| Soufre | 1,1 |
| Sulfénamide (4) | 2 |
| Diphénylguanidine | 1,47 |

| | |
|---|---|
| (1) = Silice « ZEOSIL 1165 MP » (commercialisée par Rhodia) (2) = Agent de liaison « Si69 » (commercialisé par Dégussa) (3) = N-(1,3-dimétyl-butyl)-N'-phényl-p-phénylènediamine (4) = N-cyclohexyl-2-benzothiazylsulfénamide | |

Chaque composition est préparée selon la méthode décrite dans le document de brevet européen EP-A-501 227, étant précisé que l'on conduit un premier temps de travail thermo-mécanique en deux étapes qui durent respectivement 4 et 5 minutes, pour une vitesse moyenne des palettes de 85 tours/minute dans un mélangeur d'environ 400 cm³ jusqu'à atteindre une température maximale de tombée identique de 160° C, et que l'on conduit un second temps de travail mécanique sur un outil à cylindres à 30° C incluant l'incorporation du système de vulcanisation.

La vulcanisation est effectuée à 150° C pendant 60 minutes.

Les résultats sont consignés dans le tableau 2.

**TABLEAU2**

| **COMPOSITION** | **1 (« témoin »)** | **3 (invention)** |
|---|---|---|
| ML(1+4) à 100°C _{«gomme»} | 67 | 48 |
| Propriétés à l'état non vulcanisé | | |
| ML(1+4) à 100° C _{«mélange»} | 97 | 71 |
| Propriétés à l'état vulcanisé | | |
| Shore | 65 | 65 |
| MA10 | 5,6 | 5,8 |
| MA100 | 1,8 | 1,9 |
| MA300 | 2,3 | 2,5 |
| MA300/MA100 | 1,3 | 1,3 |
| Pertes à 60° C | 24,3 | 27,0 |
| Propriétés dynamiques en fonction de la déformation | | |
| Delta G* à 23° C | 3,11 | 3,59 |
| Tan δ max à 23° C | 0,347 | 0,405 |
| Propriétés dynamiques en fonction de la température | | |
| Tg dynamique (° C) | -16 | -13 |
| Tan δ à Tg | 0,75 | 0,72 |

Concernant les propriétés à l'état vulcanisé, on notera que les propriétés de la composition 3 selon l'invention sont du même ordre de grandeur que celles de la composition 1 « témoin ».

En effet, les modules aux faibles et aux fortes déformations et les propriétés hystérétiques aux faibles et aux fortes déformations (tan δ max à 23° C et pertes à 60° C, respectivement) de la composition 3 sont proches des modules et des propriétés hystérétiques correspondants de la composition 1. Les différences de propriétés hystérétiques observées à petites (ΔG*) et à grandes (pertes à 60° C) déformations entre les compositions 1 et 3 sont principalement dues à la différence de Tg dynamique et de Mooney « gomme » entre ces compositions. A même Tg dynamique et même Mooney gomme, ces propriétés auraient été analogues.

On notera également que la Tg dynamique de la composition 3 selon l'invention est très proche de celle de la composition 1 « témoin ».

De plus, la composition 3 selon l'invention présente une valeur de viscosité Mooney « mélange » inférieure de 26 points à celle de la composition 1 « témoin ».

On notera en outre que le BR selon l'invention, qui est par définition dépourvu d'enchaînement styrénique, permet de conférer à la composition 3 selon l'invention pratiquement les mêmes propriétés à l'état vulcanisé que celles conférées à la composition 1 « témoin » par le SBR 1, qui présente un taux massique d'enchaînements styréniques de 25 %, grâce au taux élevé (20%) de motifs vinyliques cycliques que comporte ce BR, à la différence du SBR 1 qui en est dépourvu.

### 3) Troisième exemple comparatif :

Dans cet exemple, on a comparé entre elles deux compositions de caoutchouc 4 et 5 de type bande de roulement pour pneumatique tourisme dont la charge renforçante est constituée de silice.

La première composition 4 selon l'invention est à base du SBR 4 selon l'invention obtenu à l'exemple 4 du § I. ci-dessus (ce SBR 4 présente un taux massique d'enchaînements styréniques de 8 % et un taux massique de motifs vinyliques cycliques de 18 %).

La seconde composition 5 selon l'invention est à base du SBR 5 selon l'invention obtenu à l'exemple 5 du § I. ci-dessus (ce SBR 5 présente un taux massique d'enchaînements styréniques de 25 % et un taux massique de motifs vinyliques cycliques de 2,5 % seulement).

La formulation de chacune des compositions 4 et 5 est la suivante
(en pce : parties en poids pour cent parties d'élastomère):

| | |
|---|---|
| Elastomère SBR 4 ou SBR 5 | 100 |
| Silice (1) | 60 |
| Huile aromatique « ENERFLEX 65 » | 20,5 |
| Agent de liaison (2) | 4,8 |
| ZnO | 2,5 |
| Acide stéarique | 2 |
| Antioxydant (3) | 1,9 |
| Cire anti-ozone « C32ST » | 1,5 |
| Soufre | 1,1 |
| Sulfénamide (4) | 2 |
| Diphénylguanidine | 1,1 |

| | |
|---|---|
| (1) = Silice « ZEOSIL 1165 MP » (commercialisée par Rhodia) (2) = Agent de liaison « Si69 » (commercialisé par Dégussa) (3) = N-(1,3-dimétyl-butyl)-N'-phényl-p-phénylènediamine (4) = N-cyclohexyl-2-benzothiazylsulfénamide | |

Chaque composition est préparée selon la méthode décrite dans le document de brevet européen EP-A-501 227, étant précisé que l'on conduit un premier temps de travail thermo-mécanique en deux étapes qui durent respectivement 4 et 5 minutes, pour une vitesse moyenne des palettes de 85 tours/minute dans un mélangeur d'environ 400 cm³ jusqu'à atteindre une température maximale de tombée identique de 160° C, et que l'on conduit un second temps de travail mécanique sur un outil à cylindres à 30° C incluant l'incorporation du système de vulcanisation.

La vulcanisation est effectuée à 150° C pendant 60 minutes.

Les résultats sont consignés dans le tableau 3.

**TABLEAU 3**

| **COMPOSITION** | **4 (invention)** | **5 (« témoin »)** |
|---|---|---|
| ML(1+4) à 1000 C _{«gomme»} | 43 | 43 |
| Propriétés à l'état non vulcanisé | | |
| ML(1+4) à 100° C _{«mélange»} | 61 | 55 |
| Propriétés à l'état vulcanisé | | |
| Shore | 59,3 | 59,1 |
| MA10 | 4,8 | 4,5 |
| MA100 | 1,5 | 1,4 |
| MA300 | 1,5 | 1,5 |
| MA300/MA100 | 1,0 | 1,08 |
| Pertes60 | 35,0 | 35,1 |
| Propriétés dynamiques en fonction de la déformation | | |
| Delta G* à 23° C | 1,45 | 1,15 |
| Tan δ max à 23° C | 0,257 | 0,238 |
| Propriétés dynamiques en fonction de la température | | |
| Tg dynamique (° C) | -15 | -15 |
| Tan δ à Tg | 1,11 | 1,19 |
| E' à 50° C en MPa | 5,5 | 5,7 |
| E" à 50° C en MPa | 0,83 | 0,86 |

Concernant les propriétés à l'état vulcanisé, on notera que les propriétés de la composition 4 selon l'invention sont analogues à celles de la composition 5 « témoin ».

En effet, les modules aux faibles et aux fortes déformations et les propriétés hystérétiques aux faibles et aux fortes déformations (tan δ max à 23° C et pertes à 60° C, respectivement) de la composition 4 sont proches des modules et des propriétés hystérétiques correspondants de la composition 5.

On notera également que les propriétés dynamiques (Tg dynamique, notamment) de la composition 4 selon l'invention sont très proches de celles de la composition 5 « témoin ».

Par conséquent, à même Tg dynamique et même Mooney « gomme », les propriétés hystérétiques observées à petites (ΔG*) et à grandes (pertes à 60° C) déformations sont analogues pour les compositions 4 et 5.

On notera en outre que le SBR 4 selon l'invention, qui présente un taux massique d'enchaînements styréniques de 8 % seulement, permet de conférer à la composition 4 selon l'invention pratiquement les mêmes propriétés à l'état vulcanisé que celles conférées à la composition 5 « témoin » par le SBR 5, qui présente un taux massique d'enchaînements styréniques de 25 %, grâce au taux élevé (18 %) de motifs vinyliques cycliques que comporte ce SBR 4, à la différence du SBR 5 qui n'en comporte que 2,5 %.

## Revendications

1. Composition de caoutchouc réticulable ou réticulée qui est utilisable pour constituer une bande de roulement d'enveloppe de pneumatique, ladite composition comprenant un élastomère diénique linéaire ou ramifié issu d'au moins un diène conjugué et une charge renforçante, **caractérisée en ce que** ledit élastomère comporte des unités vinyliques cycliques de type vinylcycloalcane répondant à la formule générique suivante : 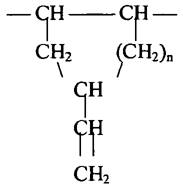 avec n = 1 ou 2.
selon un taux massique égal ou supérieur à 15 % et **en ce qu'**il présente une masse moléculaire moyenne en nombre allant de 30 000 à 350 000 g/mol.

2. Composition de caoutchouc réticulable ou réticulée selon la revendication 1, **caractérisée en ce que** ladite masse moléculaire moyenne en nombre appartient à un domaine allant de 60 000 à 350 000 g/mol.

3. Composition de caoutchouc réticulable ou réticulée selon la revendication 2, **caractérisée en ce que** ladite masse moléculaire moyenne en nombre appartient à un domaine allant de 100 000 à 300 000 g/mol.

4. Composition de caoutchouc réticulable ou réticulée selon une des revendications précédentes, **caractérisé en ce que** ledit taux massique d'unités vinyliques cycliques est égal ou supérieur à 20 %.

5. Composition de caoutchouc réticulable ou réticulée selon une des revendications précédentes, **caractérisé en ce que** ledit élastomère comprend une fraction massique d'unités issues de diènes conjugués supérieure à 30 %.

6. Composition de caoutchouc réticulable ou réticulée selon la revendication 5, **caractérisé en ce que** ledit élastomère est constitué d'un homopolymère du butadiène-1,3 ou d'un copolymère du butadiène-1,3 et d'un co-monomère vinyl aromatique.

7. Composition de caoutchouc réticulable ou réticulée selon une des revendications 2 à 6, **caractérisée en ce qu'**elle comprend ledit élastomère selon une quantité égale ou supérieure à 50 pce (pce: parties en poids pour cent parties d'élastomère(s)).

8. Composition de caoutchouc réticulable ou réticulée selon les revendications 3 et 7, **caractérisée en ce qu'**elle comprend ledit élastomère selon une quantité égale à 100 pce.

9. Composition de caoutchouc réticulable ou réticulée selon une des revendications précédentes, **caractérisée en ce que** ladite charge renforçante comprend une charge inorganique renforçante, telle que de la silice.

10. Composition de caoutchouc réticulable ou réticulée selon la revendication 9, **caractérisée en ce que** ladite charge renforçante comprend ladite charge inorganique renforçante selon une fraction massique égale ou supérieure à 50 %.

11. Composition de caoutchouc réticulable ou réticulée selon la revendication 10, **caractérisée en ce que** ladite charge renforçante comprend ladite charge inorganique renforçante selon une fraction massique égale à 100 %.

12. Composition de caoutchouc réticulable ou réticulée selon une des revendications précédentes, **caractérisée en ce que** ledit élastomère est ramifié au moyen d'un agent d'étoilage, tel que le tris(2,4-ditertbutylphényl)phosphite.

13. Procédé de préparation d'une composition de caoutchouc réticulable ou réticulée telle que définie à la revendication 1, **caractérisé en ce qu'**il comprend au moins
➢ une mise en oeuvre d'un premier temps de travail thermo-mécanique des constituants de la composition comprenant au moins la charge inorganique renforçante et au moins l'élastomère linéaire ou ramifié issu d'au moins un diène conjugué et comportant des unités vinyliques cycliques de type vinylcycloalcane répondant à la formule générique suivante : 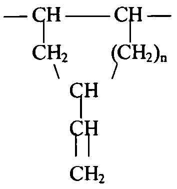 avec n = 1 ou 2.
selon un taux massique égal ou supérieur à 15 % et présentant une masse moléculaire moyenne en nombre allant de 30 000 à 350 000 g/mol, à l'exception du système de réticulation et à une température maximale comprise entre 130°C et 200°C,
➢ suivi d'un second temps de travail mécanique mis en oeuvre à une température inférieure à ladite température maximale du premier temps et au cours duquel est incorporé ledit système de réticulation.

14. Procédé de préparation d'une composition de caoutchouc réticulable ou réticulée selon la revendication 13, **caractérisé en ce que** préalablement à la mise en oeuvre du premier temps de travail thermo-mécanique on prépare ledit élastomère en mettant en oeuvre la ou les étapes suivantes :
a) on prépare un élastomère diénique linéaire issu d'au moins un diène conjugué, ledit élastomère comportant des unités vinyliques cycliques selon un taux massique égal ou supérieur à 15 % et présentant une masse moléculaire moyenne en nombre allant de 60 000 à 100 000 g/mol, par polymérisation anionique en continu d'un ou de plusieurs monomères comprenant au moins un monomère diène conjugué en faisant réagir, dans un solvant hydrocarboné inerte aliphatique ou alicyclique, ledit ou lesdits monomères avec un système catalytique comprenant un initiateur organolithié, un agent polaire comportant plusieurs hétéro-atomes et un sel d'un métal alcalin d'un alcool aliphatique ou alicyclique, ledit système satisfaisant à la relation suivante :
(i) le rapport molaire (agent polaire / initiateur) est égal ou supérieur à 3 ; puis
b) on ramifie éventuellement l'élastomère linéaire obtenu par un agent d'étoilage, tel que le tris(2,4-ditertbutylphényl)phosphite, pour l'obtention d'un élastomère diénique ramifié.

15. Procédé de préparation d'une composition de caoutchouc réticulable ou réticulée selon la revendication 13, **caractérisé en ce que** préalablement à la mise en oeuvre du premier temps de travail thermo-mécanique on prépare ledit élastomère en mettant en oeuvre la ou les étapes suivantes :
a) on prépare un élastomère diénique linéaire issu d'au moins un diène conjugué, ledit élastomère comportant des unités vinyliques cycliques selon un taux massique égal ou supérieur à 15 % et présentant une masse moléculaire moyenne en nombre allant de 100 000 à 300 000 g/mol, par polymérisation anionique en continu d'un ou de plusieurs monomères comprenant au moins un monomère diène conjugué en faisant réagir, dans un solvant hydrocarboné inerte aliphatique ou alicyclique, ledit ou lesdits monomères avec un système catalytique comprenant un initiateur organolithié, un agent polaire comportant plusieurs hétéro-atomes et un sel d'un métal alcalin d'un alcool aliphatique ou alicyclique, de manière que ledit système satisfasse à la fois aux trois conditions suivantes :
(i) le rapport molaire (agent polaire / initiateur) est égal ou supérieur à 3
(ii) le rapport molaire (sel / initiateur) appartient à un domaine allant de 0,01 à 2, et
(iii) le rapport molaire (sel / agent polaire) appartient à un domaine allant de 0,001 à 0,5 ;
b) on ramifie éventuellement l'élastomère linéaire obtenu par un agent d'étoilage, tel que le tris(2,4-ditertbutylphényl)phosphite, pour l'obtention d'un élastomère diénique ramifié.

16. Procédé de préparation selon la revendication 14 ou 15, **caractérisé en ce que** le rapport molaire (agent polaire / initiateur) est égal ou supérieur à 5 pour ladite condition (i) de ladite étape a).

17. Procédé de préparation selon une des revendications 14 à 16, **caractérisé en ce que** ledit rapport molaire (agent polaire / initiateur) est égal ou supérieur à 10.

18. Procédé de préparation selon la revendication 17, **caractérisé en ce que** ledit rapport molaire (agent polaire / initiateur) est égal ou supérieur à 15.

19. Procédé de préparation selon la revendication 15, **caractérisé en ce que** le rapport molaire (sel / agent polaire) appartient à un domaine allant de 0,001 à 0,1 pour ladite condition (iii) de ladite étape a).

20. Procédé de préparation selon la revendication 15, **caractérisé en ce que** le rapport molaire (sel / initiateur) appartient à un domaine allant de 0,01 à 0,6 pour ladite condition (ii) de ladite étape a).

21. Procédé de préparation selon la revendication 20, **caractérisé en ce que** ledit rapport molaire (sel / initiateur) appartient à un domaine allant de 0,01 à 0,2.

22. Procédé de préparation selon la revendication 20, **caractérisé en ce que** ledit rapport molaire (sel / initiateur) appartient à un domaine allant de 0,3 à 0,6.

23. Procédé de préparation selon une des revendications 14 à 22, **caractérisé en ce que** ledit agent polaire appartient au groupe constitué par les diamines et les diéthers.

24. Procédé de préparation selon la revendication 23, **caractérisé en ce que** ledit agent polaire est la tétraméthyléthylènediamine.

25. Procédé de préparation selon la revendication 15, **caractérisé en ce que** ledit sel est un sel de sodium d'un alcool aliphatique présentant de 3 à 12 atomes de carbone, tel que le tert-amylate de sodium.

26. Bande de roulement d'enveloppe de pneumatique, **caractérisée en ce qu'**elle comprend une composition de caoutchouc réticulable ou réticulée selon une des revendications 1 à 12.

27. Bande de roulement d'enveloppe de pneumatique selon la revendication 26, **caractérisée en ce qu'**elle est constituée de ladite composition de caoutchouc.

28. Enveloppe de pneumatique, **caractérisée en ce qu'**elle comporte une bande de roulement selon la revendication 26 ou 27.

## Claims

1. A crosslinkable or crosslinked rubber composition which may be used to form a tyre tread, said composition comprising a linear or branched diene elastomer resulting from at least one conjugated diene and a reinforcing filler, **characterised in that** said elastomer comprises cyclic vinyl units of the vinylcycloalkane type, and they are of the following generic formula: 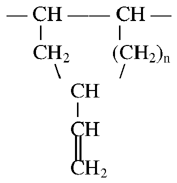 where n = 1 or 2.
according to a mass content of greater than or equal to 15% and **in that** it has a number-average molecular weight ranging from 30,000 to 350,000 g/mol.

2. A crosslinkable or crosslinked rubber composition according to claim 1, **characterised in that** said number-average molecular weight falls within a range of from 60,000 to 350,000 g/mol.

3. A crosslinkable or crosslinked rubber composition according to claim 2, **characterised in that** said number-average molecular weight falls within a range of from 100,000 to 300,000 g/mol.

4. A crosslinkable or crosslinked rubber composition according to any one of the preceding claims, **characterised in that** said mass content of cyclic vinyl units is greater than or equal to 20%.

5. A crosslinkable or crosslinked rubber composition according to any one of the preceding claims, **characterised in that** said elastomer comprises a mass fraction of units resulting from conjugated dienes of greater than 30%.

6. A crosslinkable or crosslinked rubber composition according to claim 5, **characterised in that** said elastomer consists of a 1,3-butadiene homopolymer or a copolymer of 1,3-butadiene and vinyl aromatic comonomer.

7. A crosslinkable or crosslinked rubber composition according to any one of claims 2 to 6, **characterised in that** it comprises said elastomer in a quantity of greater than or equal to 50 phr (phr: parts by weight per hundred parts of elastomer(s)).

8. A crosslinkable or crosslinked rubber composition according to claims 3 and 7, **characterised in that** it comprises said elastomer in a quantity equal to 100 phr.

9. A crosslinkable or crosslinked rubber composition according to any one of the preceding claims, **characterised in that** said reinforcing filler comprises an inorganic reinforcing filler, such as silica.

10. A crosslinkable or crosslinked rubber composition according to claim 9, **characterised in that** said reinforcing filler comprises said inorganic reinforcing filler in a mass fraction of greater than or equal to 50%.

11. A crosslinkable or crosslinked rubber composition according to claim 10, **characterised in that** said reinforcing filler comprises said inorganic reinforcing filler in a mass fraction equal to 100%.

12. A crosslinkable or crosslinked rubber composition according to any one of the preceding claims, **characterised in that** said elastomer is branched by means of a starring agent, such as tris(2,4-di-tert.-butylphenyl) phosphite.

13. A preparation process for a crosslinkable or crosslinked rubber composition as defined in claim 1, **characterised in that** it comprises at least:
➢ carrying out a first thermomechanical working phase of at least the inorganic reinforcing filler and at least the linear or branched diene elastomer resulting from at least one conjugated diene and comprising cyclic vinyl units of the vinylcycloalkane type of the following generic formula: 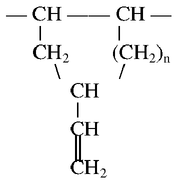 where n = 1 or 2.
according to a mass content of greater than or equal to 15% and **in that** it has a number-average molecular weight ranging from 30,000 to 350,000 g/mol, with the exception of the crosslinking system and at a maximum temperature of between 130°C and 200°C,
➢ followed by a second mechanical working phase carried out at a temperature below said maximum temperature of the first phase and during which said crosslinking system is incorporated

14. A preparation process for a crosslinkable or crosslinked rubber composition as according to claim 13, **characterised in that** said before carrying out the first thermomechanical working phase the elastomer is obtained by carrying out the following steps:
a) a linear diene elastomer resulting from at least one conjugated diene is prepared, said elastomer comprising cyclic vinyl units according to a mass content of greater than or equal to 15% and having a number-average molecular weight of from 60,000 to 100,000 g/mol, by continuous anionic polymerisation of one or more monomers comprising at least one conjugated diene monomer by the reaction, in an inert aliphatic or alicyclic hydrocarbon solvent, of said monomer or monomers with a catalytic system comprising an organolithium initiator, a polar agent comprising several heteroatoms and an alkali metal salt of an aliphatic or alicyclic alcohol, said system satisfying the following relationship:
(i) the (polar agent:initiator) molar ratio is greater than or equal to 3; then
b) the linear elastomer obtained is optionally branched by a starring agent, such as tris(2,4-di-tert.-butylphenyl) phosphite, in order to obtain a branched diene elastomer.

15. A preparation process for a crosslinkable or crosslinked rubber composition according to the claim 13, **characterised in that** before carrying out the first thermomechanical working phase the elastomer is obtained by carrying out the following steps:
a) a linear diene elastomer resulting from at least one conjugated diene is prepared, said elastomer comprising cyclic vinyl units according to a mass content of greater than or equal to 15% and having a number-average molecular weight of from 100,000 to 300,000 g/mol, by continuous anionic polymerisation of one or more monomers comprising at least one conjugated diene monomer by the reaction, in an inert aliphatic or alicyclic hydrocarbon solvent, of said monomer or monomers with a catalytic system comprising an organolithium initiator, a polar agent comprising several heteroatoms and an alkali metal salt of an aliphatic or alicyclic alcohol, in such a manner that said system simultaneously satisfies the following three conditions:
(i) the (polar agent:initiator) molar ratio is greater than or equal to 3
(ii) the (salt:initiator) molar ratio falls within a range of from 0.01 to 2, and
(iii) the (salt:polar agent) molar ratio falls within a range of from 0.001 to 0.5.
b) the linear elastomer obtained is optionally branched by a starring agent, such as tris(2,4-di-tert.-butylphenyl) phosphite, in order to obtain a branched diene elastomer.

16. A preparation process according to claim 14 or claim 15, **characterised in that** (polar agent:initiator) molar ratio is greater than or equal to 5 for said condition (i) of said step a).

17. A preparation process according to any one of claims 14 to 16, **characterised in that** said (polar agent:initiator) molar ratio is greater than or equal to 10.

18. A preparation process according to claim 17, **characterised in that** said (polar agent:initiator) molar ratio is greater than or equal to 15.

19. A preparation process according to claim 15, **characterised in that** (salt:polar agent) molar ratio falls within a range of from 0.001 to 0.1 for said condition (iii) of said step a).

20. A preparation process according to claim 15, **characterised in that** (salt:initiator) molar ratio falls within a range of from 0.01 to 0.6 for said condition (ii) of said step a).

21. A preparation process according to claim 20, **characterised in that** said (salt:initiator) molar ratio falls within a range of from 0.01 to 0.2.

22. A preparation process according to claim 20, **characterised in that** said (salt:initiator) molar ratio falls within a range of from 0.3 to 0.6.

23. A preparation process according to any one of claims 14 to 22, **characterised in that** said polar agent belongs to the group consisting of diamines and diethers.

24. A preparation process according to claim 23, **characterised in that** said polar agent is tetramethylethylenediamine.

25. A preparation process according to claim 15, **characterised in that** said salt is a sodium salt of an aliphatic alcohol having from 3 to 12 carbon atoms, such as sodium tert.-amylate.

26. A tyre tread, **characterised in that** it comprises a crosslinkable or crosslinked rubber composition according to any one of claims 1 to 12.

27. A tyre tread according to claim 26, **characterised in that** it consists of said rubber composition.

28. A tyre, **characterised in that** it comprises a tread according to claim 26 or claim 27.

## Patentansprüche

1. Vernetzbare oder vernetzte Kautschukzusammensetzung, die verwendbar ist, um eine Lauffläche eines Reifenmantels zu bilden, wobei die Zusammensetzung ein lineares oder verzweigtes Dienelastomer, das aus mindestens einem konjugierten Dien stammt, und einen verstärkenden Füllstoff umfasst, **dadurch gekennzeichnet, dass** das Elastomer cyclische Vinyleinheiten vom Typ Vinylcycloalkan, die der folgenden allgemeinen Formel entsprechen: 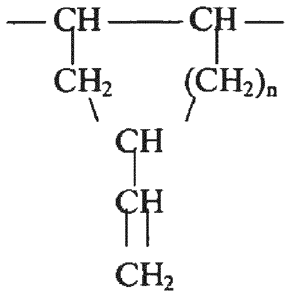 worin n = 1 oder 2,
gemäß einem Masseverhältnis gleich oder größer 15 % beinhaltet und dadurch, dass es einen Zahlenmittelwert der Molmasse im Bereich zwischen 30.000 und 350.000 g/mol aufweist.

2. Vernetzbare oder vernetzte Kautschukzusammensetzung nach Anspruch 1, **dadurch gekennzeichnet, dass** der Zahlenmittelwert der Molmasse in einem Bereich zwischen 60.000 und 350.000 g/mol liegt.

3. Vernetzbare oder vernetzte Kautschukzusammensetzung nach Anspruch 2, **dadurch gekennzeichnet, dass** der Zahlenmittelwert der Molmasse in einem Bereich zwischen 100.000 und 300.000 g/mol liegt.

4. Vernetzbare oder vernetzte Kautschukzusammensetzung nach einem der vorhergehenden Ansprüche, **dadurch gekennzeichnet, dass** das Masseverhältnis der cyclischen Vinyleinheiten gleich oder größer 20 % ist.

5. Vernetzbare oder vernetzte Kautschukzusammensetzung nach einem der vorhergehenden Ansprüche, **dadurch gekennzeichnet, dass** das Elastomer eine Massefraktion an Einheiten umfasst, die aus konjugierten Dienen stammen, die größer als 30 % ist.

6. Vernetzbare und vernetzte Kautschukzusammensetzung nach Anspruch 5, **dadurch gekennzeichnet, dass** das Elastomer aus einem Butadien-1,3-Homopolymer oder einem Butadien-1,3-Copolymer und einem aromatischen Vinyl-Comonomer besteht.

7. Vernetzbare oder vernetzte Kautschukzusammensetzung nach einem der Ansprüche 2 bis 6, **dadurch gekennzeichnet, dass** sie das Elastomer in einer Menge gleich oder größer 50 phr (phr: parts per hundred of rubber; Anteile je hundert Anteile Elastomer(e)) umfasst.

8. Vernetzbare oder vernetzte Kautschukzusammensetzung nach den Ansprüchen 3 und 7, **dadurch gekennzeichnet, dass** sie das Elastomer in einer Menge gleich 100 phr umfasst.

9. Vernetzbare oder vernetzte Kautschukzusammensetzung nach einem der vorhergehenden Ansprüche, **dadurch gekennzeichnet, dass** der verstärkende Füllstoff einen verstärkenden anorganischen Füllstoff, wie etwa Siliciumdioxid, umfasst.

10. Vernetzbare oder vernetzte Kautschukzusammensetzung nach Anspruch 9, **dadurch gekennzeichnet, dass** der verstärkende Füllstoff den verstärkenden anorganischen Füllstoff in einer Massefraktion gleich oder größer 50 % umfasst.

11. Vernetzbare oder vernetzte Kautschukzusammensetzung nach Anspruch 10, **dadurch gekennzeichnet, dass** der verstärkende Füllstoff den verstärkenden anorganischen Füllstoff in einer Massefraktion gleich 100 % umfasst.

12. Vernetzbare oder vernetzte Kautschukzusammensetzung nach einem der vorhergehenden Ansprüche, **dadurch gekennzeichnet, dass** das Elastomer mithilfe eines Sternbildungsmittels, wie etwa Tris(2,4-ditertbutylphenyl)phosphit, verzweigt wird.

13. Verfahren zur Herstellung einer vernetzbaren oder vernetzten Kautschukzusammensetzung wie in Anspruch 1 definiert, **dadurch gekennzeichnet, dass** es mindestens Folgendes umfasst:
- Durchführen einer ersten Etappe zur thermo-mechanischen Bearbeitung der Bestandteile der Zusammensetzung, die mindestens den anorganischen verstärkenden Füllstoff und mindestens das lineare oder verzweigte Elastomer umfasst, das aus mindestens einem konjugierten Dien stammt und cyclische Vinyleinheiten vom Typ Vinylcycloalkan, die der folgenden allgemeinen Formel entsprechen: 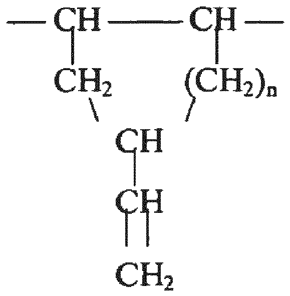 worin n = 1 oder 2,
gemäß einem Masseverhältnis gleich oder größer 15 % beinhaltet und einen Zahlenmittelwert der Molmasse im Bereich zwischen 30.000 und 350.000 g/mol aufweist, abgesehen vom Vernetzungssystem, und bei einer maximalen Temperatur im Bereich zwischen 130 °C und 200 °C,
- gefolgt von einer zweiten Etappe zur mechanischen Bearbeitung, die bei einer Temperatur unterhalb der maximalen Temperatur der ersten Etappe durchgeführt wird, und in deren Verlauf das Vernetzungssystem integriert wird.

14. Verfahren zur Herstellung einer vernetzbaren oder vernetzten Kautschukzusammensetzung nach Anspruch 13, **dadurch gekennzeichnet, dass** vor der Durchführung der ersten Etappe zur thermo-mechanischen Bearbeitung das Elastomer hergestellt wird, indem der oder die folgenden Schritte durchgeführt werden:
a) Herstellen eines linearen Dienelastomers, das aus mindestens einem konjugierten Dien stammt, wobei das Elastomer cyclische Vinyleinheiten in einem Masseverhältnis gleich oder größer 15 % beinhaltet und einen Zahlenmittelwert der Molmasse im Bereich zwischen 60.000 und 100.000 g/mol aufweist, durch kontinuierliche anionische Polymerisation eines oder mehrerer Monomere, die mindestens ein konjugiertes Dienmonomer umfassen, indem in einem inerten aliphatischen oder alicyclischen Kohlenwasserstofflösemittel das oder die Monomere mit einem katalytischen System umgesetzt wird/werden, das einen lithiumorganischen Starter, ein polares Mittel, das mehrere Heteroatome beinhaltet und ein Alkalimetallsalz eines aliphatischen oder alicyclischen Alkohols umfasst, wobei das System die folgende Gleichung erfüllt:
(i) das Molverhältnis (polares Mittel/Starter) ist gleich oder größer als 3; dann
b) gegebenenfalls Verzweigen des erhaltenen linearen Elastomers durch ein Sternbildungsmittel, wie etwa Tris(2,4-ditertbutylphenyl)phosphit, um ein verzweigtes Dienelastomer zu erhalten.

15. Verfahren zur Herstellung einer vernetzbaren oder vernetzten Kautschukzusammensetzung nach Anspruch 13, **dadurch gekennzeichnet, dass** das Elastomer vor der Durchführung der ersten Etappe zur thermo-mechanischen Bearbeitung hergestellt wird, indem der oder die folgenden Schritte durchgeführt werden:
a) Herstellen eines linearen Dienelastomers, das aus mindestens einem konjugierten Dien stammt, wobei das Elastomer cyclische Vinyleinheiten in einem Masseverhältnis gleich oder größer 15 % beinhaltet und einen Zahlenmittelwert der Molmasse im Bereich zwischen 100.000 und 300.000 g/mol aufweist, durch kontinuierliche anionische Polymerisation eines oder mehrerer Monomere, die mindestens ein konjugiertes Dienmonomer umfassen, indem in einem inerten aliphatischen oder alicyclischen Kohlenwasserstofflösemittel das oder die Monomere mit einem katalytischen System umgesetzt wird/werden, das einen lithiumorganischen Starter, ein polares Mittel, das mehrere Heteroatome beinhaltet und ein Alkalimetallsalz eines aliphatischen oder alicyclischen Alkohols umfasst, so dass das System gleichzeitig die folgenden drei Bedingungen erfüllt:
(i) das Molverhältnis (polares Mittel/Starter) ist gleich oder größer als 3,
(ii) das Molverhältnis (Salz/Starter) liegt im Bereich zwischen 0,01 und 2, und
(iii) das Molverhältnis (Salz/polares Mittel) liegt im Bereich zwischen 0,001 und 0,5;
b) gegebenenfalls Verzweigen des erhaltenen linearen Elastomers durch ein Sternbildungsmittel, wie etwa Tris(2,4-ditertbutylphenyl)phosphit, um ein verzweigtes Dienelastomer zu erhalten.

16. Verfahren zur Herstellung nach Anspruch 14 oder 15, **dadurch gekennzeichnet, dass** das Molverhältnis (polares Mittel/Starter) für die Bedingung (i) aus Schritt a) gleich oder größer 5 ist.

17. Verfahren zur Herstellung nach einem der Ansprüche 14 bis 16, **dadurch gekennzeichnet, dass** das Molverhältnis (polares Mittel/Starter) gleich oder größer 10 ist.

18. Verfahren zur Herstellung nach Anspruch 17, **dadurch gekennzeichnet, dass** das Molverhältnis (polares Mittel/Starter) gleich oder größer 15 ist.

19. Verfahren zur Herstellung nach Anspruch 15, **dadurch gekennzeichnet, dass** das Molverhältnis (Salz/polares Mittel) für die Bedingung (iii) aus Schritt a) im Bereich zwischen 0,001 und 0,1 liegt.

20. Verfahren zur Herstellung nach Anspruch 15, **dadurch gekennzeichnet, dass** das Molverhältnis (Salz/Starter) für die Bedingung (ii) aus Schritt a) im Bereich zwischen 0,01 und 0,6 liegt.

21. Verfahren zur Herstellung nach Anspruch 20, **dadurch gekennzeichnet, dass** das Molverhältnis (Salz/Starter) im Bereich zwischen 0,01 und 0,2 liegt.

22. Verfahren zur Herstellung nach Anspruch 20, **dadurch gekennzeichnet, dass** das Molverhältnis (Salz/Starter) im Bereich zwischen 0,3 und 0,6 liegt.

23. Verfahren zur Herstellung nach einem der Ansprüche 14 bis 22, **dadurch gekennzeichnet, dass** das polare Mittel zu der Gruppe gehört, die aus Diaminen und Diethern besteht.

24. Verfahren zur Herstellung nach Anspruch 23, **dadurch gekennzeichnet, dass** das polare Mittel Tetramethylethylendiamin ist.

25. Verfahren zur Herstellung nach Anspruch 15, **dadurch gekennzeichnet, dass** das Salz ein Natriumsalz eines aliphatischen Alkohols ist, das 3 bis 12 Kohlenstoffatome aufweist, wie etwa Natriumtert-Amylat.

26. Lauffläche eines Reifenmantels, **dadurch gekennzeichnet, dass** sie eine vernetzbare oder vernetzte Kautschukzusammensetzung nach einem der Ansprüche 1 bis 12 umfasst.

27. Lauffläche eines Reifenmantels nach Anspruch 26, **dadurch gekennzeichnet, dass** sie aus der Kautschukzusammensetzung besteht.

28. Reifenmantel, **dadurch gekennzeichnet, dass** er eine Lauffläche nach Anspruch 26 oder 27 umfasst.
